# EUROPEAN PATENT SPECIFICATION

(11) **EP 3 261 376 B1**
(45) Date of publication and mention of the grant of the patent: **15.04.2020**
(21) Application number: 15886066.8
(22) Date of filing: 09.10.2015
(51) Int. Cl.: H04W 16/14, H04L 5/06

(54) **HETEROGENEOUS-SYSTEM SAME-FREQUENCY NETWORKING METHOD AND DEVICE**
HETEROGENES-SYSTEM GLEICHFREQUENZ-VERNETZUNGSVERFAHREN UND -VORRICHTUNG
PROCÉDÉ POUR SYSTÈME-HÉTÉROGÈNE SUR UNE MÊME FRÉQUENCE ET DISPOSITIF

(30) Priority: 23.03.2015 CN 201510127671
(43) Date of publication of application: 27.12.2017
(73) Proprietor: ZTE Corporation, Shenzhen, Guangdong 518057 (CN)
(72) Inventor: WANG, Jicheng, Shenzhen Guangdong 518057 (CN); CHEN, Changgen, Shenzhen Guangdong 518057 (CN)
(74) Representative: Baudler, Ron
(86) International application number: PCT/CN2015/091573
(87) International publication number: WO 2016/150144

(56) References cited:
- CN-A- 102 065 438
- CN-A- 103 634 803
- US-B1- 8 804 649
- SCHILLING D L ET AL: "SPECTRUM ALLOCATION TO ACCOMMODATE TWO OR MORE COMPETITIVE SYSTEMS", FROM PIONEERS TO THE 21ST. CENTURY. DENVER, MAY 10 - 13, 1992; [PROCEEDINGS OF THE VEHICULAR TECHNOLOGY SOCIETY CONFERENCE (VTSC)], NEW YORK, IEEE, US, vol. 2 OF 02, 10 May 1992 (1992-05-10), pages 1022-1023, XP000339954, DOI: 10.1109/VETEC.1992.245253 ISBN: 978-0-7803-0673-8

## Description

### Technical Field

The invention relates to, but is not limited to, a multi-mode base station technology, and more particularly to a method and device for realizing a heterogeneous-system same-frequency networking based on two different systems, namely a Universal Mobile Telecommunications System (UMTS) and a Long Term Evolution (LTE) system.

### Background

Wideband Code Division Multi-Access (WCDMA) is one of International Mobile Telecommunication-2000 (IMT-2000) standards determined by an International Telecommunication Union (ITU), and is a third-generation mobile communications system with serving as radio interfaces made by a Third Generation Partnership Project (3GPP) organization and based on a GSM MAP Core Network (CN) and a UMTS Terrestrial Radio Access Network (UTRAN). Compared with other second-generation and third-generation mobile communications systems, the WCDMA is mainly characterized in that an air interface adopts a Direct Sequence-Code Division Multiple Access (DS-CDMA) manner and a Frequency Division Duplex (FDD) manner, and a chip rate of the WCDMA is 3.84Mcps, and a carrier bandwidth of the WCDMA is 5MHz.

After the WCDMA standard is published, the 3GPP organization still continuously improves the protocol standard to increase a performance of the system, and introduces a High Speed Downlink Packet Access (HSDPA) technology and a High Speed Uplink Packet Access (HSUPA) technology into protocols of R5 and R6 releases respectively. The HSDPA and the HSUPA are collectively referred to as High Speed Packet Access (HSPA). Compared with WCDMA with a previous release, the main technological improvement of the WCDMA here lies in that some data processing tasks are moved from a Radio Network Controller (RNC) to a Node B to implement, and novel technologies of high-order modulation, link adaptation, a smaller Transmission Time Interval (TTI), multi-carrier frequency combination and the like are adopted. Some improved enhancement functions are introduced into the HSPA technology after a 3GPP R7 release, the HSPA technology is also referred to as HSPA+. For convenience for description, concepts HSPA and HSPA+ are not distinguished herein.

The UTRAN provides radio access services for a User Equipment (UE) in a UMTS, and an air interface standard therebetween is defined by a 3GPP protocol; herein some of concepts and contents related to the document are briefly described as follows.

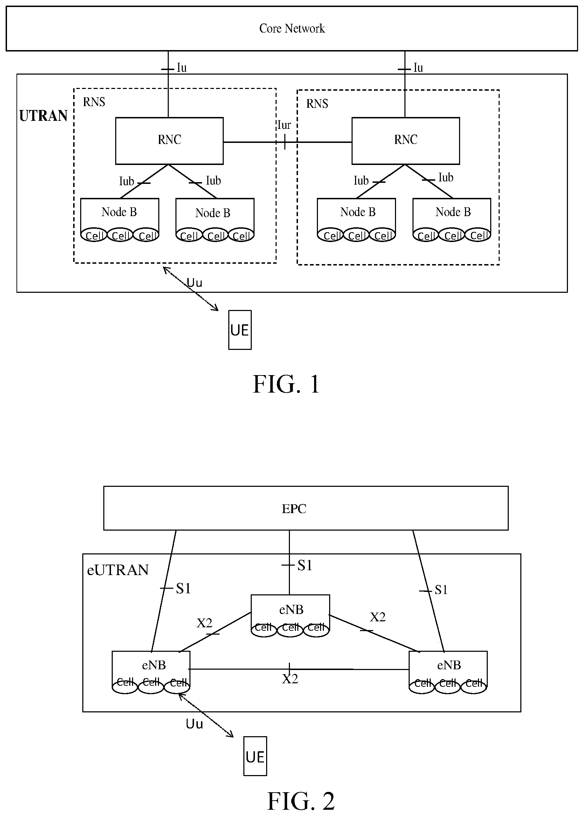

FIG. 1 is a logic structure diagram of a UMTS. As shown in FIG. 1, the UTRAN may include multiple Radio Network Subsystems (RNS), and is connected with a CN by an Iu interface defined by the 3GPP standard. Each RNS includes a plurality of Nodes B, and is controlled by an RNC. The RNC is connected with the Node B by an Iub interface defined by the 3GPP standard. The RNCs are connected with each other by an Iur interface defined by the 3GPP standard. Resources in each Node B may be defined as one or more cells to serve as access points of communications between the UE and the UTRAN. The UTRAN is connected with the UE by a Uu interface defined by the 3GPP standard. It is important to note that two logic network elements, namely the RNC and the Node B, may also be arranged in the same physical equipment for implementation. Thus, the Iub interface defined by the 3GPP becomes an internal interface of the physical equipment. When functions of the RNC and the Node B are mentioned herein, functional allocation of the RNC and the Node B defined by the 3GPP standard are conformed, and it is not distinguished whether the RNC and the Node B are implemented by using different pieces of physical equipment or the same physical equipment respectively. When interactive functions between the RNC and the Node B are mentioned herein, it is also not distinguished whether the Iub interface is used or the internal interface is used.

LTE is an LTE system relative to the UMTS, and belongs to IMT standard protocol families, and is made by the 3GPP organization and starts to be introduced from an R8 protocol release. The LTE is an Evolved Universal Terrestrial Access Network (eUTRAN) based on an Evolved Packet Core (EPC). An LTE air interface may adopt a Time Division Duplex (TDD) mode or an FDD mode. The FDD mode is focused herein. In the FDD mode, uplink and downlink radios are based on a Single Carrier-Frequency Division Multiple Access (SC-FDMA) technology and an Orthogonal Frequency Division Multiple Access (OFDMA) technology respectively. The LTE air interface may use a flexible radio bandwidth based on the OFDM technology, so standard frequency band bandwidths defined by the 3GPP include 1.4MHz, 3MHz, 5MHz, 10MHz, 15MHz, 20MHz and so on.

FIG. 2 is a logic structure diagram of an LTE system. As shown in FIG. 2, different from the UTRAN, the eUTRAN adopts a flattened structure. An evolved Node B (eNB) is directly connected with an EPC by using an S1 interface defined by the 3GPP standard, and a controller node is cancelled. eNBs are connected with each other by using an X2 interface defined by the 3GPP standard. Resources of each eNB may be defined as one or more cells to serve as access points of communications between the UE and the eUTRAN. The eUTRAN is connected with the UE by using an LTE Uu interface defined by the 3GPP standard.

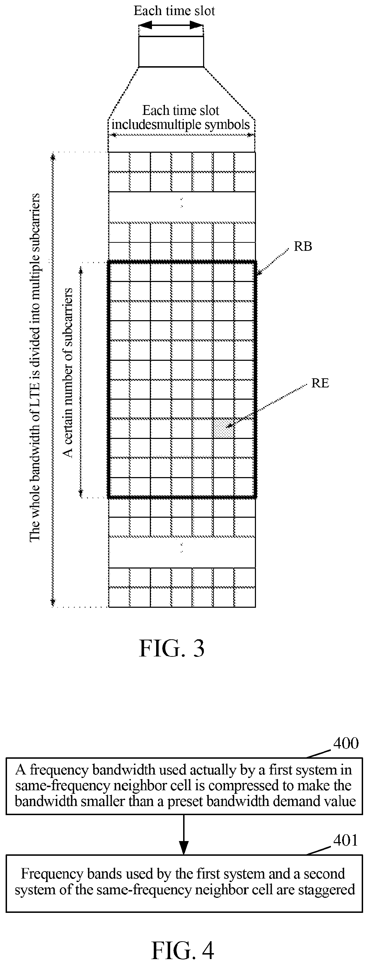

The LTE air interface modulates data by using mutually-orthogonal subcarriers based on the OFDM technology. Thus, the OFDM technology has higher spectrum usage efficiency than a traditional FDM technology. Besides, since each subcarrier bandwidth is relatively low, for example, 15KHz, a symbol adjustment rate is relatively low, but sufficient subcarriers can be used in parallel to improve the whole transmission rate. Therefore, the LTE system has a frequency division scheduling capability, and can allocate different subcarriers to different users. FIG. 3 is a diagram of subcarriers in the LTE. As shown in FIG. 3, a symbol of a subcarrier is defined as a Resource Element (RE), and a certain number of continuous subcarriers and symbols are defined as a Resource Block (RB). The LTE eNB can allocate resources to different users by taking an RB as a unit.

Regardless of the UMTS or the LTE, the eNB can complete radio coverage for a geographic region by using multiple antennae, and a cellular space diversity manner is adopted, and a region covered by each antenna may be referred to as a sector. Multiple carrier frequencies may be deployed in each sector by using a frequency diversity manner. Both the UMTS and the LTE have a same-frequency networking capability, that is, two neighbor sectors are deployed by using the same carrier frequency. At present, a multi-mode base station has been widely used in the industry, that is, two logic entities namely the Node B and the eNB are deployed on the same network element simultaneously to support UMTS and LTE access systems simultaneously. A multi-carrier power amplification technology and product have been maturely used, and multiple carriers with different bandwidths may be deployed in each sector. An operator needs to apply a radio spectrum supervision department for spectrum resources used for deploying a radio access network, and can only obtain spectrum resources with limited bandwidths.

Although both the UMTS and the LTE system have the same-frequency networking capability, a heterogeneous-system same-frequency networking solution for the two different systems, the UMTS and the LTE, is not proposed, wherein the heterogeneous-system refers to different systems. Herein, the UMTS includes WCDMA and an evolved HSPA technology thereof, and the LTE also includes an evolved LTE-Advanced (LTE-A) technology.

SCHILLING D L ET AL ("SPECTRUM ALLOCATION TO ACCOMMODATE TWO OR MORE COMPETITIVE SYSTEMS", FROM PIONEERS TO THE 21ST. CENTURY. DENVER, MAY 10 - 13, 1992; [PROCEEDINGS OF THE VEHICULAR TECHNOLOGY SOCIETY CONFERENCE (VTSC)], NEW YORK, IEEE, US, vol. 2 OF 02, 10 May 1992 (1992-05-10), pages 1022-1023) demonstrates how two or more competitive systems can share the spectrum without interfering with each other, without significantly decreasing the chip rate (and hence the bandwidth) of each PCN system (this is extremely important since the wider the bandwidth the more immune is the PCN system to fading due to multipath propagation) and without increasing the level of interference seen by the fixed service microwave user (FSMU).

### Summary

The following is a brief introduction for a subject described herein in detail. The brief introduction is not intended to restrict the scope of protection of claims.

Examples of the present invention provide a method and device for realizing a heterogeneous-system same-frequency networking, which can implement the heterogeneous-system same-frequency networking of a UMTS and an LTE, and reduce heterogeneous-system same-frequency interference and ensure the system performance.

An embodiment of the present invention provides a method for realizing a heterogeneous-system same-frequency networking, wherein the heterogeneous-system refers to two different systems. The method includes: compressing a frequency bandwidth used actually by a first system in same-frequency neighbor cells to make the frequency bandwidth smaller than a preset bandwidth demand value, and staggering frequency bands used by the first system and a second system of the same-frequency neighbor cells; wherein the staggering frequency bands used by the first system and a second system of the same-frequency neighbor cells includes: adjusting a central frequency of a second system cell in the same-frequency neighbor cells to make a spectrum of the second system cell abut against an edge of a non-overlapping spectrum between the same-frequency neighbor cells.

In an example, the same-frequency neighbor cells include two or more pairs of same-frequency neighbor cells; and
after compressing a frequency bandwidth used actually by a first system in same-frequency neighbor cells and before staggering frequency bands used by the first system and a second system of the same-frequency neighbor cells, the method further includes:
compressing a frequency bandwidth or bandwidths which are not compressed and used actually by one or more pairs of same-frequency neighbor first system cells to make the frequency bandwidth or bandwidths smaller than the bandwidth demand value; and adjusting a central frequency of each pair of same-frequency neighbor first system and/or second system cells to make spectra of the same-frequency neighbor first system and/or second system cells continuous.

In an example, the same-frequency neighbor cells include two or more pairs of same-frequency neighbor cells; and
after compressing a frequency bandwidth used actually by a first system in same-frequency neighbor cells and before staggering frequency bands used by the first system and a second system of the same-frequency neighbor cells, the method further includes: combining two or more second system cells, of which spectra are continuous, located at a same base station in the same-frequency neighbor cells; and
staggering frequency bands used by the first system and a second system of the same-frequency neighbor cells includes: adjusting a central frequency of the combined and compressed same-frequency neighbor cell to make a spectrum of the combined and compressed same-frequency neighbor cell abut against an edge of a non-overlapping spectrum between the same-frequency neighbor cells.

In an example, after compressing a frequency bandwidth used actually by a first system in same-frequency neighbor cells and before staggering frequency bands used by the first system and a second system of the same-frequency neighbor cells, the method further includes:
compressing a frequency bandwidth used actually by the second system in the same-frequency neighbor cells to make the frequency bandwidth smaller than a preset bandwidth demand value.

In an example, the edge is an upper edge or a lower edge.

In an example, the first system is a UMTS, and the second system is an LTE system.

In an example, the method further includes an LTE cell transmits data by using resources of the non-overlapping spectrum for a cell-edge user.

In an example, the compression adopts a double-side bandwidth compression manner or a single-side bandwidth compression manner.

An embodiment of the present invention also provides a device for realizing a heterogeneous-system same-frequency networking, wherein the heterogeneous-system refers to two different systems. The device includes a compression module and a processing module, wherein the compression module is configured to compress a frequency bandwidth used actually by a first system in same-frequency neighbor cells to make the frequency bandwidth smaller than a preset bandwidth demand value, the processing module is configured to stagger frequency bands used by the first system and a second system of the same-frequency neighbor cells, and the processing module is configured to adjust a central frequency of a second system cell in the same-frequency neighbor cells to make a spectrum of the second system cell abut against an edge of a non-overlapping spectrum.

In an example, when the same-frequency neighbor cells include two or more pairs of same-frequency neighbor cells, the compression module is further configured to,
compress a frequency bandwidth or bandwidths which are not compressed by blocks and used actually by one or more pairs of same-frequency neighbor first system cells to make the frequency bandwidth or bandwidths smaller than the preset bandwidth demand value; and adjust a central frequency of each pair of same-frequency neighbor first system and/or second system cells to make spectra of the same-frequency neighbor first system and/or second system cells continuous.

In an example, when the same-frequency neighbor cells include two or more pairs of same-frequency neighbor cells, the compression module is further configured to combine two or more second system cells, of which spectrum are continuous, located at a same base station in the same-frequency neighbor cells; and
the processing module is configured to: adjust a central frequency of the combined and compressed same-frequency neighbor cell to make a spectrum of the combined and compressed same-frequency neighbor cell abut against an edge of a non-overlapping spectrum.

In an example, the compression module is further configured to compress a frequency bandwidth used actually by the second system in the same-frequency neighbor cells to make the frequency bandwidth smaller than a preset bandwidth demand value.

An example of the present invention also provides a computer-readable storage medium in which a program instruction is stored. When the program instruction is executed, the abovementioned method can be implemented.

Compared with the existing art, the technical solution of examples of the present invention includes that a frequency bandwidth used actually by a first system in same-frequency neighbor cells is compressed to make the frequency bandwidth smaller than a preset bandwidth demand value; and frequency bands used by the first system and a second system of the same-frequency neighbor cells are staggered. By means of the technical solution provided in examples of the present invention, a non-overlapping spectrum is generated between the same-frequency neighbor cells, and the second system transmits data through the non-overlapping spectrum to the greatest extent, thereby achieving reduction of same-frequency interference between the same-frequency neighbor cells.

After the drawings and the detailed descriptions are read and understood, other aspects can be understood.

### Brief Description of Drawings

FIG. 1 is a logic structure diagram of a UMTS system in the existing art.
FIG. 2 is a logic structure diagram of an LTE system in the existing art.
FIG. 3 is a diagram of subcarriers in the LTE in the existing art.
FIG. 4 is a flowchart of a method for realizing a heterogeneous-system same-frequency networking according to an embodiment of the present invention.
FIG. 5 is a composition structure diagram of a device for realizing a heterogeneous-system same-frequency networking according to an embodiment of the present invention.
FIG. 6 is a diagram of a typical scenario to which an application example is applied according to the present invention.
FIG. 7(a) is a spectrum distribution diagram of each same-frequency networking cell in Application Example one in the present invention.
FIG. 7(b) is a spectrum distribution diagram of each same-frequency networking cell in Application Example one processed in the existing art.
FIG. 8 is a diagram of a double-side bandwidth compression manner adopted in Application Example one of the present invention.
FIG. 9(a) is a spectrum distribution diagram of each same-frequency networking cell in Application Example two of the present invention.
FIG. 9(b) is a spectrum distribution diagram of each same-frequency networking cell in Application Example two processed in the existing art.
FIG. 10(a) is a spectrum distribution diagram of each same-frequency networking cell in Application Example three of the present invention.
FIG. 10(b) is a spectrum distribution diagram of each same-frequency networking cell in Application Example three processed in the existing art.
FIG. 11(a) is a spectrum distribution diagram of each same-frequency networking cell in Application Example four of the present invention.
FIG. 11(b) is a spectrum distribution diagram of each same-frequency networking cell in Application Example four processed in the existing art.
FIG. 12 is a diagram of a single-side bandwidth compression manner adopted in Application Example four of the present invention.

### Detailed Description

Examples of the present invention will be illustrated below with reference to the drawings in detail. It is important to note that the examples of the present invention and the characteristics in the examples can be randomly combined with each other under the condition of no conflicts.

FIG. 4 is a flowchart of a method for realizing a heterogeneous-system same-frequency networking according to an embodiment of the present invention. As shown in FIG. 4, the method includes the steps 400-401 as follows.

In step 400, a frequency bandwidth used actually by a first system in same-frequency neighbor cells is compressed to make the frequency bandwidth smaller than a preset bandwidth demand value.

Taking that in heterogeneous-system a first system is a UMTS, and a second system is an LTE system as an example, when an operator has spectrum resources of 5MHz or above, a frequency bandwidth used actually by the UMTS in the heterogeneous-system may be compressed at a base station to make the frequency bandwidth smaller than 5MHz. For example, a 5MHz-bandwidth UMTS waveform may be filtered by means of a transceiver of the base station. Then, only frequencies of 2.1MHz at two sides of a central frequency point are transmitted and received to achieve the aim of spectrum compression. Moreover, the industry application has proved that compared with a performance of a UMTS adopting a 5MHz bandwidth, the loss of performance of a UMTS adopting a 4.2MHz bandwidth is within an acceptable range.

In step 401, frequency bands used by the first system and a second system of the same-frequency neighbor cells are staggered.

Further taking that in heterogeneous-system the first system is the UMTS, and the second system is the LTE system as an example, frequency bands used by the UMTS and the LTE of the same-frequency neighbor cells are deployed in a staggered manner to the greatest extent. For example, a central frequency of the same-frequency neighbor cells of which the bandwidth is not compressed is adjusted to make a spectrum of the adjusted the same-frequency neighbor cells abut against an edge, such as an upper edge or a lower edge, of a non-overlapping spectrum (available spectrum) between the same-frequency neighbor cells to reduce overlapping bandwidths of UMTS and LTE spectra, thereby achieving reduction of interference between the same-frequency neighbor cells for the UMTS and the LTE system.

In an example, the method further includes that an LTE cell transmits data by using resources of the non-overlapping spectrum for a cell-edge user to the greatest extent.

By means of the technical solution provided in examples of the present invention, a non-overlapping spectrum is generated between same-frequency neighbor cells, and the second system transmits data through the non-overlapping spectrum to the greatest extent, thereby achieving reduction of same-frequency interference between the same-frequency neighbor cells. Meanwhile, part spectrum energy of a cell in a first system falls within a cell spectrum of the second system, so same-frequency interference of a cell in the second system to the cell in the first system is reduced.

When the same-frequency neighbor cells include two or more pairs of same-frequency neighbor cells, in an example, between the step 400 and the step 401, the method of the example of the present invention further includes that: a frequency bandwidth, which is not compressed in the step 400, used actually by one or more pairs of same-frequency neighbor first system cells (namely first system cells in the same-frequency neighbor cells) is compressed to make the frequency bandwidth smaller than the preset bandwidth demand value; and a central frequency of each pair of same-frequency neighbor first system cells and/or second system cells is adjusted to make spectra thereof continuous.

When the same-frequency neighbor cells include two or more pairs of same-frequency neighbor cells, in an example, between the step 400 and the step 401, the method of the example of the present invention further includes that: two or more second system cells, of which the spectrum are continuous, located at the same base station in the same-frequency neighbor cells are combined; and a central frequency of each pair of same-frequency neighbor cells is adjusted to make spectra thereof continuous.

In an example, to increase non-overlapping spectra of first system and second system same-frequency neighbor cells, after compressing the frequency bandwidth used actually by the first system in same-frequency neighbor cells and before staggering frequency bands used by the first system and the second system of the same-frequency neighbor cells, the method of the example of the present invention further includes that:
a frequency bandwidth used actually by the second system in the same-frequency neighbor cells is compressed to make the frequency bandwidth smaller than a preset bandwidth demand value. The bandwidth demand value here may be identical to or different from the bandwidth demand value in the step 400.

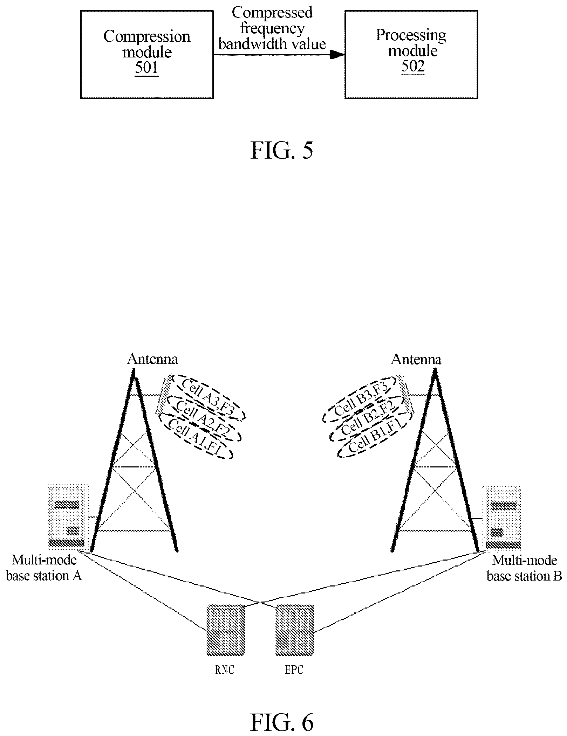

FIG. 5 is a composition structure diagram of a device for realizing a heterogeneous-system same-frequency networking according to an embodiment of the present invention. As shown in FIG. 5, the device at least includes a compression module 501 and a processing module 502.

The compression module 501 is configured to compress a frequency bandwidth used actually by a first system in same-frequency neighbor cells to make the frequency bandwidth smaller than a preset bandwidth demand value.

The processing module 502 is configured to stagger frequency bands used by the first system and a second system of the same-frequency neighbor cells.

Herein, the processing module 502 is configured to adjust a central frequency of the same-frequency neighbor cells of which the bandwidths are not compressed to make a spectrum of the adjusted the same-frequency neighbor cells abut against an edge, such as an upper edge or a lower edge, of a non-overlapping spectrum (available spectrum).

In an example, when the same-frequency neighbor cells include two or more pairs of same-frequency neighbor cells, the compression module 501 is further configured to compress a frequency bandwidth which is not compressed by blocks and used actually by the first system and/or the second system in one or more pairs of same-frequency neighbor cells to make the frequency bandwidth smaller than the preset bandwidth demand value; and adjust a central frequency of each pair of same-frequency neighbor cells to make spectra thereof continuous.

In an example, when the same-frequency neighbor cells include two or more pairs of same-frequency neighbor cells, the compression module 501 is further configured to combine two or more same-frequency neighbor cells, of which bandwidths are not compressed, located at the same base station, and utilize a bandwidth compression technology to make the base station actually use the compressed bandwidth; and adjust a central frequency of each pair of same-frequency neighbor cells to make spectra thereof continuous. Correspondingly, the processing module 502 is configured to adjust a central frequency of the combined and compressed same-frequency neighbor cell to make a spectrum of the combined and compressed same-frequency neighbor cell abut against an edge, such as an upper edge or a lower edge, of a non-overlapping spectrum (available spectrum).

In an example, to increase non-overlapping spectra of first system and second system same-frequency neighbor cells, the compression module 501 is further configured to compress a frequency bandwidth used actually by the second system in the same-frequency neighbor cells to make the frequency bandwidth smaller than a preset bandwidth demand value.

The technical solution provided in examples of the present invention is described in detail below with reference to application examples.

FIG. 6 is a diagram of a typical scenario to which an application example is applied according to the present invention. As shown in FIG. 6, two multi-mode base stations, namely a multi-mode base station A and a multi-mode base station B, are included. Two logic entities, namely a Node B and an eNB, are included inside each multi-mode base station, and the two multi-mode base stations are connected to an RNC and an EPC respectively, which may be identical or different. That is, the multi-mode base station A and the multi-mode base station B may be connected to the same RNC and EPC, or may be connected to different RNCs and EPCs respectively.

As shown in FIG. 6, it is supposed that the multi-mode base station A and the multi-mode base station B use different carriers respectively, such as a frequency band F1, a frequency band F2 and a frequency band F3, on antennae of one sector of respective sectors, and deploy three cells, namely Cell A1, Cell A2 and Cell A3, as well as Cell B1, Cell B2 and Cell B3, respectively. If the two sectors which respectively pertain to the multi-mode base station A and the multi-mode base station B cover geographic neighbor regions, Cell A1 and Cell B1, Cell A2 and Cell B2, and Cell A3 and Cell B3 form same-frequency neighbor cells on the frequency band F1, the frequency band F2 and the frequency band F3 respectively.

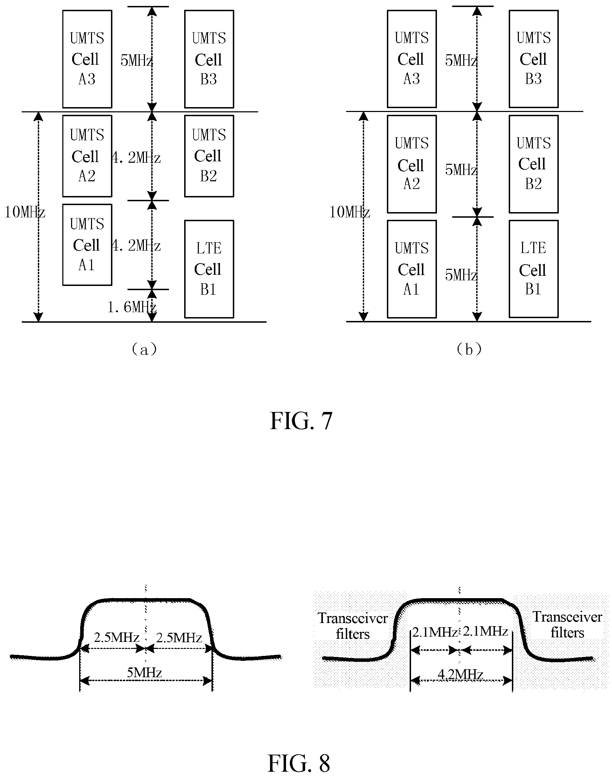

FIG. 7(a) is a spectrum distribution diagram of each same-frequency networking cell in Application Example one of the present invention. In combination with FIG. 6, it is supposed that the frequency band F1 of the multi-mode base station A is a 5MHz bandwidth, and a UMTS cell is deployed as Cell A1 shown in the figure. As shown in FIG. 7(a), in the present example, a frequency bandwidth used actually by Cell A1 is compressed to 4.2MHz. FIG. 8 is a diagram of a double-side bandwidth compression manner adopted in the present example. As shown in FIG. 8, a UMTS waveform of the 5MHz bandwidth may be filtered by means of the transceiver of the base station, and only frequencies of 2.1MHz at two sides of a central frequency point are transmitted and received to achieve the aim of spectrum compression in a double-side bandwidth compression manner as shown in FIG. 8. The industry application has proved that compared with a performance of a UMTS adopting a 5MHz bandwidth, the loss of a performance of a UMTS adopting a 4.2MHz bandwidth is within an acceptable range.

It is supposed that the frequency bands F2 of the multi-mode base station A and the multi-mode base station B are the 5MHz bandwidth, and UMTS cells are deployed as Cell A2 and Cell B2 shown in the figure respectively. To spare a sufficient bandwidth, in Application Example one, bandwidths of Cell A2 and Cell B2 may be compressed. As shown in FIG. 7(a), the bandwidths used actually by Cell A2 and Cell B2 are both compressed to 4.2MHz. Meanwhile, central frequency points of Cell A1 and Cell A2 of the multi-mode base station A are re-configured, so that spectra of these two cells are continuous and also continuous with a spectrum of Cell A3 on the frequency band F3. A central frequency point of Cell B2 of the multi-mode base station B is re-configured to make the spectrum continuous with a spectrum of Cell B3 on the frequency band F3.

It is supposed that the frequency bands F3 of the multi-mode base station A and the multi-mode base station B are the 5MHz bandwidth, and UMTS cells are deployed as Cell A3 and Cell B3 shown in the figure respectively. In the Application Example one, bandwidths of Cell A3 and Cell B3 may not be compressed. As shown in FIG. 7(a), Cell A3 and Cell B3 still use the 5MHz bandwidth actually.

It is supposed that an LTE cell is deployed as Cell B1 as shown in the figure on the frequency band F1 of the multi-mode base station B, then the frequency band F1 of the multi-mode base station B may use a bandwidth 1.4MHz, 3MHz or 5MHz theoretically. In the Application Example one, for example, the bandwidth adopts a 5MHz bandwidth of which a spectrum utilization rate is highest, and a central frequency point of Cell B1 on the frequency band F1 of the multi-mode base station B is configured to make a spectrum of Cell B1 abut against a lower edge of an available non-overlapping spectrum.

Spectra distribution of each cell of the multi-mode base station A and the multi-mode base station B are shown in FIG. 7(a). Thus, although spectra of an LTE cell such as Cell B1 in the figure and a same-frequency UMTS cell such as Cell A1 in the figure have spectrum overlapping regions, compared with the spectrum distribution diagram of each same-frequency networking cell in the Application Example one processed in the existing art as shown in FIG. 7(b), a non-overlapping spectrum of about 1.6MHz can be generated within the spectrum of Cell B1. That is to say, Cell B1 may allocate RBs on the 1.6MHz spectrum of this non-overlapping spectrum region to a cell-edge user to the greatest extent by utilizing an LTE technical principle to transmit data, to achieving reduction of same-frequency interference of Cell B1 to Cell A1. Meanwhile, part spectrum energy of the UMTS cell such as Cell A1 in the figure falls within the spectrum of the LTE cell such as Cell B1 in the figure, so same-frequency interference of Cell A1 to Cell B1 is also reduced.

It is important to note that there may not be the frequency band F2 and the frequency band F3 in the present example, and as long as an operator has a spectrum bandwidth of above 5MHz, the abovementioned method can be utilized for deployment.

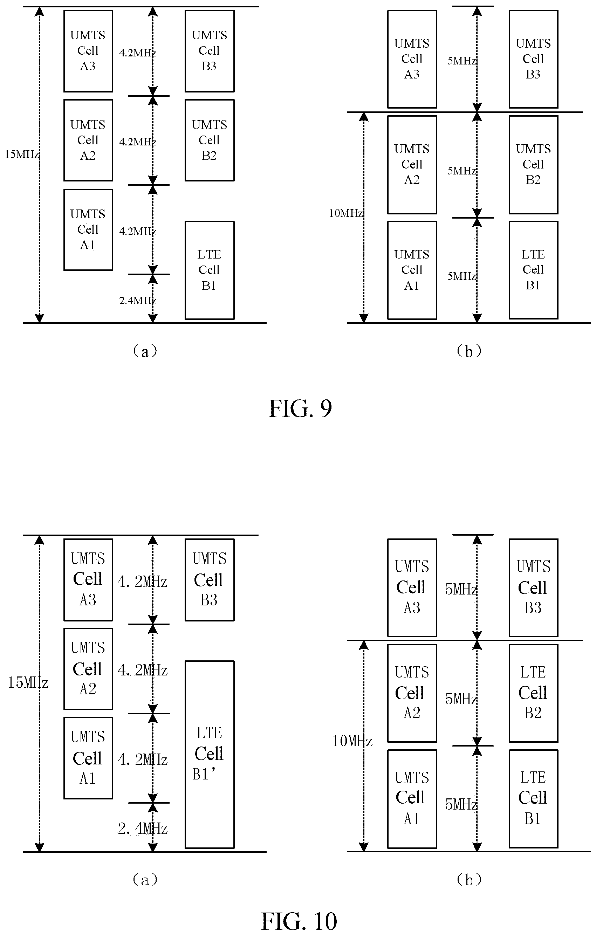

FIG. 9(a) is a spectrum distribution diagram of each same-frequency networking cell in Application Example two of the present invention. In combination with FIG. 6, on the basis of Application Example one, a UMTS cell such as Cell A3 in the figure deployed by 5MHz bandwidth of the frequency band F3 of the multi-mode base station A and the multi-mode base station B is compressed in the bandwidth by using a bandwidth compression technology to obtain 4.2MHz. Central frequency points of Cell A1, Cell A2 and Cell A3 of the multi-mode base station A are re-configured to make spectra thereof continuous and distributed at an upper end of the whole bandwidth. Central frequency points of Cell B2 and Cell B3 of the multi-mode base station B are re-configured to make spectra thereof continuous and distributed at the upper end of the whole bandwidth. Meanwhile, a central frequency point of an LTE cell such as Cell B1 in the figure on the frequency band F1 of the multi-mode base station B is configured to make a spectrum of the LTE cell such as Cell B1 abut against a lower edge of an available spectrum.

Spectra distribution of each cell of the multi-mode base station A and the multi-mode base station B are shown in FIG. 9(a). Thus, compared with the spectrum distribution diagram of each same-frequency networking cell in Application Example two processed in the existing art as shown in FIG. 9(b), a non-overlapping spectrum of about 2.4MHz is generated within the spectrum of the LTE cell such as Cell B1 in the figure. Meanwhile, part energy of the UMTS cell such as Cell A1 in the figure falling within the spectrum of the LTE cell such as Cell B1 is relatively reduced, and Cell B1 may allocate RBs on the 2.4MHz spectrum to a cell-edge user to the greatest extent by utilizing an LTE technical principle to transmit data. Compared with the Application Example one, the Application Example two reduces further more mutual interference of same-frequency networking of Cell B1 and Cell A1.

FIG. 10(a) is a spectrum distribution diagram of each same-frequency networking cell in Application Example three of the present invention. In combination with FIG. 6, on the basis of Application Example two, bandwidths of the frequency band F1 and the frequency band F2 of the multi-mode base station B may be combined to deploy an LTE cell with a 10MHz bandwidth such as Cell B1' in the figure. In Application Example three, the LTE cell such as Cell B1' in the figure deployed by the 10MHz bandwidth of the frequency band F1 and the frequency band F2 of the multi-mode base station B is compressed in the bandwidth by utilizing a bandwidth compression technology to obtain a bandwidth of about 9MHz used actually. The industry application has proved that compared with a performance of a system adopting a 10MHz bandwidth, the loss of a performance of the system adopting this spectrum compression technology is within an acceptable range. A central frequency point of the LTE cell such as Cell B1' of the multi-mode base station B is configured to make a spectrum of the LTE cell such as Cell B1' abut against a lower edge of an available spectrum. In the Application Example three, the bandwidth of Cell B1' may not be compressed and the central frequency of Cell B1' may not be adjusted. As shown in FIG. 10(a), overlapping spectra will exist between the LTE cell such as Cell B1' in the figure and a neighbor UMTS cell such as Cell A1 in the figure and between the LTE cell such as Cell B1' in the figure and a neighbor UMTS cell such as Cell A2 in the figure, and same-frequency neighbor cells are formed. Therefore, mutual interference will be generated. However, compared with the spectrum distribution diagram of each same-frequency networking cell in Application Example three processed in the existing art as shown in FIG. 10(b), the spectrum of Cell B1' has a 2.4MHz bandwidth not overlapping with Cell A1, and has a 1.8 MHz bandwidth not overlapping with Cell A2. Cell B1' may allocate RBs on these non-overlapping spectra to a cell-edge user to the greatest extent by utilizing the LTE technical principle to transmit data, to reduce mutual interference of same-frequency networking of Cell B1' and Cell A1 as well as Cell B1' and Cell A2.

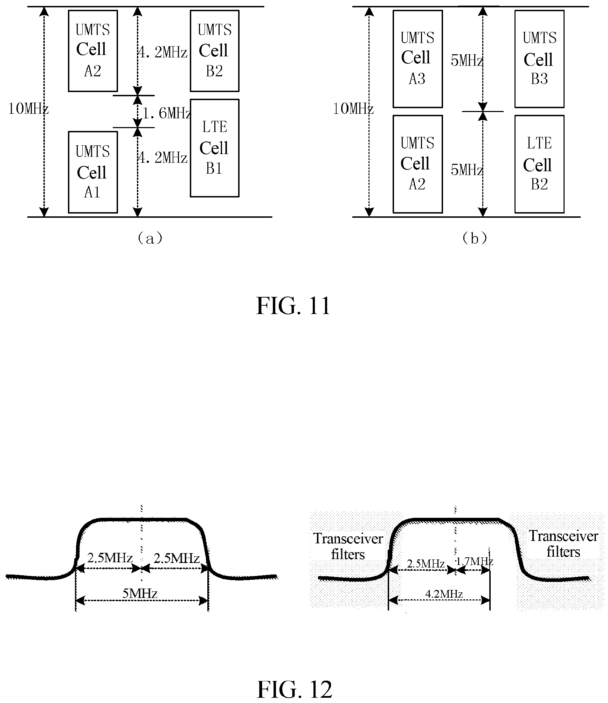

FIG. 11(a) is a spectrum distribution diagram of each same-frequency networking cell in Application Example four of the present invention. In combination with FIG. 6, it is supposed that the frequency band F1 of the multi-mode base station A and the frequency bands F2 of the multi-mode base station A and the multi-mode base station B are 5MHz bandwidths, and UMTS cells such as Cell A1, Cell A2 and Cell B2 are deployed respectively, and bandwidths used actually thereof are compressed to 4.2MHz. FIG. 12 is a diagram of a single-side bandwidth compression manner adopted in the present example. As shown in FIG. 12, filtering may be performed on only a certain single side of a 5MHz bandwidth through a transceiver of the base station, and spectra, obtained by filtering at the single side, of Cell A1, Cell A2 and Cell B2 are continuous. This manner may maintain configured central frequency points of Cell A1, Cell A2 and Cell B2 to be unchanged. Thus, changes for network configuration are reduced. It is supposed that a central frequency point of an LTE cell such as Cell B1 in the figure at the frequency band F1 of the multi-mode base station B is configured to make the spectrum of the LTE cell such as Cell B1 continuous with the spectrum of an UMTS cell such as Cell B2 in the figure. Spectra distribution of each cell of the multi-mode base station A and the multi-mode base station B are shown in FIG. 11(a). Thus, compared with the spectrum distribution diagram of each same-frequency networking cell in Application Example four processed in the existing art as shown in FIG. 11(b), a non-overlapping spectrum of about 1.6MHz is generated within the spectrum of the LTE cell such as Cell B1 in the figure, and Cell B1 may exactly allocate RBs on these non-overlapping spectra to a cell-edge user to the greatest extent by utilizing the LTE technical principle to transmit data, to reduce mutual interference of same-frequency networking of Cell B1, Cell A1 and Cell A2.

It is important to note that the abovementioned examples of the document are only some exemplary descriptions for the feasibility and usage method of the examples of the present invention, and do not represent all possible application combinations.

Those ordinary skilled in the art can understand that all or some steps in the abovementioned method may be completed by instructing relevant hardware via a program. The program may be stored in a computer-readable storage medium such as a read-only memory, a magnetic disk or an optical disk or the like. In an example, all or some steps in the abovementioned examples may also be implemented by using one or more integrated circuits. Correspondingly, each module/unit in the abovementioned examples may be implemented in a form of hardware, or may be implemented in a form of software function module. The examples of the present invention are not limited to combination of hardware and software in any specific form.

### Industrial Applicability

By means of the technical solution provided in embodiments of the present invention, a non-overlapping spectrum is generated between same-frequency neighbor cells, and a second system transmits data through the non-overlapping spectrum to the greatest extent, thereby achieving reduction of same-frequency interference between the same-frequency neighbor cells.

## Claims

1. A method for realizing a heterogeneous-system same-frequency networking, wherein the heterogeneous-system refers to two different systems, comprising:
compressing (400) a frequency bandwidth used actually by a first system in same-frequency neighbor cells to make the frequency bandwidth smaller than a preset bandwidth demand value; and
staggering (401) frequency bands used by the first system and a second system of the same-frequency neighbor cells;
**characterized in that** the staggering frequency bands used by the first system and the second system of the same-frequency neighbor cells comprises:
adjusting a central frequency of a second system cell in the same-frequency neighbor cells to make a spectrum of the second system cell abut against an edge of a non-overlapping spectrum between the same-frequency neighbor cells.

2. The method according to claim 1, wherein the same-frequency neighbor cells comprise two or more pairs of same-frequency neighbor cells; and
after the compressing the frequency bandwidth used actually by the first system in same-frequency neighbor cells and before the staggering frequency bands used by the first system and the second system of the same-frequency neighbor cells, the method further comprises:
compressing the frequency bandwidth or bandwidths which are not compressed and used actually by one or more pairs of same-frequency neighbor first system cells to make the frequency bandwidth or bandwidths smaller than the bandwidth demand value; and adjusting a central frequency of each pair of same-frequency neighbor first system and/or second system cells to make spectra of the same-frequency neighbor first system and/or second system cells continuous.

3. The method according to claim 1, wherein the same-frequency neighbor cells comprise two or more pairs of same-frequency neighbor cells; and
after the compressing the frequency bandwidth used actually by the first system in same-frequency neighbor cells and before the staggering frequency bands used by the first system and the second system of the same-frequency neighbor cells, the method further comprises:
combining two or more second system cells, of which spectra are continuous and located at a same base station in the same-frequency neighbor cells; and
the staggering frequency bands used by the first system and the second system of the same-frequency neighbor cells comprises: adjusting a central frequency of a combined and compressed same-frequency neighbor cell to make a spectrum of the combined and compressed same-frequency neighbor cell abut against an edge of a non-overlapping spectrum between the same-frequency neighbor cells.

4. The method according to claim 1, wherein after the compressing the frequency bandwidth used actually by the first system in same-frequency neighbor cells and before the staggering frequency bands used by the first system and the second system of the same-frequency neighbor cells, the method further comprises:
compressing the frequency bandwidth used actually by the second system in the same-frequency neighbor cells to make the frequency bandwidth smaller than a preset bandwidth demand value.

5. The method according to claim 1 or 3, wherein the edge is an upper edge or a lower edge.

6. The method according to any one of claims 1 to 4, wherein the first system is a Universal Mobile Telecommunications System, UMTS, and the second system is a Long Term Evolution, LTE, system.

7. The method according to claim 6, further comprising: transmitting, by an LTE cell, data by using resources of the non-overlapping spectrum for a cell-edge user.

8. The method according to any one of claims 1 to 4, wherein the compression adopts a manner in which two sides of a central frequency point of a bandwidth are compressed or a manner in which a single side of a central frequency point of a bandwidth is compressed.

9. A device for realizing a heterogeneous-system same-frequency networking, wherein the heterogeneous-system refers to two different systems, comprising: a compression module (501) and a processing module (502), wherein
the compression module (501) is configured to compress a frequency bandwidth used actually by a first system in same-frequency neighbor cells to make the frequency bandwidth smaller than a preset bandwidth demand value; and
the processing module (502) is configured to stagger frequency bands used by the first system and a second system of the same-frequency neighbor cells;
**characterized in that** the processing module (502) is configured to adjust a central frequency of a second system cell in the same-frequency neighbor cells to make a spectrum of the second system cell abut against an edge of a non-overlapping spectrum.

10. The device according to claim 9, wherein when the same-frequency neighbor cells comprise two or more pairs of same-frequency neighbor cells, the compression module (501) is further configured to compress a frequency bandwidth or bandwidths which are not compressed by blocks and used actually by one or more pairs of same-frequency neighbor first system cells to make the frequency bandwidth or bandwidths smaller than the preset bandwidth demand value; and adjust a central frequency of each pair of same-frequency neighbor first system and/or second system cells to make spectra of the same-frequency neighbor first system and/or second system cells continuous.

11. The device according to claim 9, wherein when the same-frequency neighbor cells comprise two or more pairs of same-frequency neighbor cells, the compression module (501) is further configured to combine two or more second system cells, of which spectrum are continuous and located at a same base station in the same-frequency neighbor cells; and
the processing module (502) is configured to adjust a central frequency of a combined and compressed same-frequency neighbor cell to make a spectrum of the combined and compressed same-frequency neighbor cell abut against an edge of a non-overlapping spectrum.

12. The device according to any one of claims 9 to 11, wherein the compression module (501) is further configured to compress a frequency bandwidth used actually by the second system in the same-frequency neighbor cells to make the frequency bandwidth smaller than a preset bandwidth demand value.

13. A computer-readable storage medium in which a program instruction is stored, wherein when the program instruction is executed, the method according to any one of claims 1 to 8 can be implemented.

## Patentansprüche

1. Verfahren zur Realisierung eines heterogenen Systems mit gleicher Frequenz, wobei sich das heterogene System auf zwei verschiedene Systeme bezieht, umfassend:
Komprimieren (400) einer Frequenzbandbreite, die tatsächlich von einem ersten System in gleichfrequenten Nachbarzellen verwendet wird, um die Frequenzbandbreite kleiner als einen voreingestellten Bandbreitenanforderungswert zu machen; und
Staffeln (401) der vom ersten System und einem zweiten System der gleichfrequenten Nachbarzellen verwendeten Frequenzbänder;
**dadurch gekennzeichnet, dass** die von dem ersten System und dem zweiten System der gleichfrequenten Nachbarzellen verwendeten gestaffelten Frequenzbänder umfassen:
Einstellen einer Mittelfrequenz einer zweiten Systemzelle in den gleichfrequenten Nachbarzellen, um ein Spektrum der zweiten Systemzelle an einer Kante eines nicht überlappenden Spektrums zwischen den gleichfrequenten Nachbarzellen anzugrenzen.

2. Verfahren nach Anspruch 1, wobei die gleichfrequenten Nachbarzellen zwei oder mehr Paare von gleichfrequenten Nachbarzellen umfassen; und
nach dem Komprimieren der Frequenzbandbreite, die tatsächlich vom ersten System in gleichfrequenten Nachbarzellen verwendet wird, und vor dem Staffeln der Frequenzbänder, die vom ersten System und vom zweiten System der gleichfrequenten Nachbarzellen verwendet werden, umfasst das Verfahren ferner:
Komprimieren der Frequenzbandbreite oder Bandbreiten, die nicht komprimiert und tatsächlich von einem oder mehreren Paaren gleichfrequenter benachbarter erster Systemzellen verwendet werden, um die Frequenzbandbreite oder Bandbreiten kleiner als den Bandbreitenanforderungswert zu machen; und Einstellen einer Mittelfrequenz jedes Paares gleichfrequenter erster und/oder zweiter Systemzellen, um die Spektren der gleichfrequenten ersten und/oder zweiten Systemzellen fortlaufend zu machen.

3. Verfahren nach Anspruch 1, wobei die gleichfrequenten Nachbarzellen zwei oder mehr Paare von gleichfrequenten Nachbarzellen umfassen; und
nach dem Komprimieren der Frequenzbandbreite, die tatsächlich vom ersten System in gleichfrequenten Nachbarzellen verwendet wird, und vor dem Staffeln der Frequenzbänder, die vom ersten System verwendet werden, und
das zweite System der gleichfrequenten Nachbarzellen, wobei das Verfahren ferner umfasst: Kombinieren von zwei oder mehr Zellen des zweiten Systems, deren Spektren fortlaufend sind und sich an derselben Basisstation in den gleichfrequenten Nachbarzellen befinden; und
das Staffelung der Frequenzbänder, die von dem ersten System und dem zweiten System der gleichfrequenten Nachbarzellen verwendet werden, umfasst: Einstellen einer Mittelfrequenz einer kombinierten und komprimierten gleichfrequenten Nachbarzelle, um ein Spektrum der kombinierten und komprimierten gleichfrequenten Nachbarzelle an einer Kante eines nicht überlappenden Spektrums zwischen den gleichfrequenten Nachbarzellen anzugrenzen.

4. Verfahren nach Anspruch 1, wobei das Verfahren nach dem Komprimieren der Frequenzbandbreite, die tatsächlich von dem ersten System in gleichfrequenten Nachbarzellen verwendet wird, und vor dem Staffeln der Frequenzbänder, die von dem ersten System und dem zweiten System der gleichfrequenten Nachbarzellen verwendet werden, weiterhin umfasst:
Komprimieren der Frequenzbandbreite, die tatsächlich vom zweiten System in den gleichfrequenten Nachbarzellen verwendet wird, um die Frequenzbandbreite kleiner als einen voreingestellten Bandbreitenanforderungswert zu machen.

5. Verfahren nach Anspruch 1 oder 3, wobei die Kante eine Ober kante oder eine Unter kante ist.

6. Verfahren nach einem der Ansprüche 1 bis 4, wobei das erste System ein UMTS (Universal Mobile Telecommunications System) und das zweite System ein LTE-System (Long Term Evolution) ist.

7. Verfahren nach Anspruch 6, weiterhin umfassend: Übertragen von Daten durch eine LTE-Zelle unter Verwendung von Ressourcen des nicht überlappenden Spektrums für einen Zellenkantenbenutzer.

8. Verfahren nach einem der Ansprüche 1 bis 4, wobei das Komprimieren eine Art und Weise annimmt, in der zwei Seiten eines Mittelfrequenzpunktes einer Bandbreite komprimiert werden oder eine Art und Weise, in der eine einzelne Seite eines Mittelfrequenzpunktes einer Bandbreite komprimiert wird.

9. Vorrichtung zum Realisieren eines heterogenen Systems mit gleicher Frequenz, wobei sich das heterogene System auf zwei verschiedene Systeme bezieht, umfassend: ein Komprimierungsmodul (501) und ein Verarbeitungsmodul (502), wobei
das Komprimierungsmodul (501) konfiguriert ist, um eine Frequenzbandbreite zu komprimieren, die tatsächlich von einem ersten System in gleichfrequenten Nachbarzellen verwendet wird, um die Frequenzbandbreite kleiner als einen voreingestellten Bandbreitenanforderungswert zu machen; und
das Verarbeitungsmodul (502) konfiguriert ist, um die von dem ersten System und einem zweiten System verwendeten Frequenzbänder der gleichfrequenten Nachbarzellen zu staffeln;
**dadurch gekennzeichnet, dass** das Verarbeitungsmodul (502) konfiguriert ist, um eine Mittelfrequenz einer zweiten Systemzelle in den gleichfrequenten Nachbarzellen so einzustellen, dass ein Spektrum der zweiten Systemzelle an einer Kante eines nicht überlappenden Spektrums angrenzt.

10. Vorrichtung nach Anspruch 9, wobei, wenn die gleichfrequenten Nachbarzellen zwei oder mehr Paare von gleichfrequenten Nachbarzellen umfassen, das Komprimierungsmodul (501) ferner konfiguriert ist, um
eine Frequenzbandbreite oder Bandbreiten zu komprimieren, die nicht durch Blöcke komprimiert und tatsächlich von einem oder mehreren Paaren gleichfrequenter Nachbarzellen des ersten Systems verwendet werden, um die Frequenzbandbreite oder Bandbreiten kleiner als den voreingestellten Bandbreitenanforderungswert zu machen; und eine Mittelfrequenz jedes Paares gleichfrequenter Nachbarzellen des ersten Systems und/oder zweiten Systems einzustellen, um die Spektren des gleichfrequenten Nachbarzellen des ersten Systems und/oder zweiten Systems fortlaufend zu machen.

11. Vorrichtung nach Anspruch 9, wobei, wenn die gleichfrequenten Nachbarzellen zwei oder mehr Paare von gleichfrequenten Nachbarzellen umfassen, das Komprimierungsmodul (501) ferner konfiguriert ist, um
zwei oder mehr Zellen des zweiten Systems zu kombinieren, deren Spektrum fortlaufend ist und die sich an derselben Basisstation in den gleichfrequenten Nachbarzellen befinden; und
das Verarbeitungsmodul (502) konfiguriert ist, um eine Mittelfrequenz einer kombinierten und komprimierten gleichfrequenten Nachbarzelle so einzustellen, dass ein Spektrum der kombinierten und komprimierten gleichfrequenten Nachbarzelle an einem Rand eines nicht überlappenden Spektrums angrenzt.

12. Vorrichtung nach einem der Ansprüche 9 bis 11, wobei das Komprimierungsmodul (501) ferner konfiguriert ist, um eine Frequenzbandbreite zu komprimieren, die tatsächlich von dem zweiten System in den gleichfrequenten Nachbarzellen verwendet wird, um die Frequenzbandbreite kleiner als einen voreingestellten Bandbreitenanforderungswert zu machen.

13. Ein computerlesbares Speichermedium, in dem ein Programmbefehl gespeichert ist, wobei bei der Ausführung des Programmbefehls das Verfahren nach einem der Ansprüche 1 bis 8 implementiert werden kann.

## Revendications

1. Procédé de réalisation d'un réseau de même fréquence à système hétérogène, dans lequel le système hétérogène se réfère à deux systèmes différents, comprenant :
la compression (400) d'une largeur de bande de fréquence utilisée effectivement par un premier système dans des cellules voisines de même fréquence pour rendre la largeur de bande de fréquence plus petite qu'une valeur de demande de largeur de bande prédéfinie ; et
échelonnement (401) des bandes de fréquences utilisées par le premier système et un second système de cellules voisines de même fréquence ;
**caractérisé en ce que** le échelonnement des bandes de fréquences utilisées par le premier système et le second système des cellules voisines de même fréquence comprend
ajustement d'une fréquence centrale d'une cellule du second système dans les cellules voisines de même fréquence pour faire en sorte qu'un spectre de la cellule du second système soit en butée contre un bord d'un spectre non chevauchant entre les cellules voisines de même fréquence.

2. Procédé selon la revendication 1, dans lequel les cellules voisines de même fréquence comprennent deux ou plusieurs paires de cellules voisines de même fréquence ; et
après la compression de la largeur de bande de fréquence utilisée effectivement par le premier système dans les cellules voisines de même fréquence et avant le échelonnement des bandes de fréquence utilisées par le premier système et le second système des cellules voisines de même fréquence, le procédé comprend en outre :
en compressant la largeur de bande de fréquences ou les largeurs de bande qui ne sont pas compressées et utilisées effectivement par une ou plusieurs paires de cellules du premier système voisin de même fréquence pour rendre la largeur de bande de fréquences ou les largeurs de bande plus petites que la valeur de la demande de largeur de bande ; et en ajustant une fréquence centrale de chaque paire de cellules du premier système voisin de même fréquence et/ou du second système pour rendre les spectres des cellules du premier système voisin de même fréquence et/ou du second système continus.

3. Procédé selon la revendication 1, dans lequel les cellules voisines de même fréquence comprennent deux ou plusieurs paires de cellules voisines de même fréquence ; et
après la compression de la largeur de bande de fréquence effectivement utilisée par le premier système dans les cellules voisines de même fréquence et avant le échelonnement des bandes de fréquence utilisées par le premier système et
le second système de cellules voisines de même fréquence, le procédé comprend en outre : la combinaison de deux ou plusieurs cellules du second système, dont les spectres sont continus et situés à une même station de base dans les cellules voisines de même fréquence ; et
le échelonnement des bandes de fréquences utilisées par le premier système et le second système de cellules voisines de même fréquence comprend : l'ajustement d'une fréquence centrale d'une cellule voisine de même fréquence combinée et compressée pour faire en sorte qu'un spectre de la cellule voisine de même fréquence combinée et compressée soit en butée contre un bord d'un spectre non chevauchant entre les cellules voisines de même fréquence.

4. Procédé selon la revendication 1, dans lequel, après la compression de la largeur de bande de fréquence utilisée effectivement par le premier système dans des cellules voisines de même fréquence et avant le échelonnement des bandes de fréquence utilisées par le premier système et le second système des cellules voisines de même fréquence, le procédé comprend en outre :
en compressant la largeur de bande de fréquence utilisée effectivement par le second système dans les cellules voisines de même fréquence pour rendre la largeur de bande de fréquence plus petite qu'une valeur de demande de largeur de bande prédéfinie.

5. Procédé selon la revendication 1 ou 3, dans lequel le bord est un bord supérieur ou un bord inférieur.

6. Procédé selon l'une des revendications 1 à 4, dans lequel le premier système est un système de télécommunications mobiles universelles (UMTS) et le second système est un système d'évolution à long terme (LTE).

7. Procédé selon la revendication 6, comprenant en outre : la transmission, par une cellule LTE, de données en utilisant des ressources du spectre non chevauchant pour un utilisateur de bord de cellule.

8. Procédé selon l'une quelconque des revendications 1 à 4, dans lequel la compression adopte une manière dont deux côtés d'un point de fréquence centrale d'une largeur de bande sont compressés ou une manière dont un seul côté d'un point de fréquence centrale d'une largeur de bande est compressé.

9. Dispositif de réalisation d'un réseau de même fréquence à système hétérogène, dans lequel le système hétérogène se réfère à deux systèmes différents, comprenant : un module de compression (501) et un module de traitement (502), dans lequel
le module de compression (501) est configuré pour compresser une largeur de bande de fréquence utilisée effectivement par un premier système dans des cellules voisines de même fréquence pour rendre la largeur de bande de fréquence plus petite qu'une valeur de demande de largeur de bande prédéfinie ; et
le module de traitement (502) est configuré pour échelonner les bandes de fréquence utilisées par le premier système et un second système de cellules voisines de même fréquence ;
**caractérisé en ce que** le module de traitement (502) est configuré pour ajuster une fréquence centrale d'une cellule du second système dans les cellules voisines de même fréquence afin de faire en sorte qu'un spectre de la cellule du second système soit en butée contre un bord d'un spectre non chevauchant.

10. Dispositif selon la revendication 9, dans lequel lorsque les cellules voisines de même fréquence comprennent deux ou plusieurs paires de cellules voisines de même fréquence, le module de compression (501) est en outre configuré à
compresser une largeur de bande de fréquence ou des largeurs de bande qui ne sont pas compressées par blocs et utilisées effectivement par une ou plusieurs paires de cellules du premier système voisin de même fréquence pour rendre la largeur de bande de fréquence ou les largeurs de bande plus petites que la valeur de demande de largeur de bande prédéfinie ; et ajuster une fréquence centrale de chaque paire de cellules du premier système voisin de même fréquence et/ou de cellules du second système pour rendre les spectres du premier système voisin de même fréquence et/ou des cellules du second système continus.

11. Dispositif selon la revendication 9, dans lequel lorsque les cellules voisines de même fréquence comprennent deux ou plusieurs paires de cellules voisines de même fréquence, le module de compression (501) est en outre configuré à
combiner deux ou plusieurs cellules du deuxième système, dont le spectre est continu et situé à une même station de base dans les cellules voisines de même fréquence ; et
le module de traitement (502) est configuré pour ajuster une fréquence centrale d'une cellule voisine de même fréquence combinée et compressée afin qu'un spectre de la cellule voisine de même fréquence combinée et compressée soit en butée contre un bord d'un spectre non chevauchant.

12. Dispositif selon l'une quelconque des revendications 9 à 11, dans lequel le module de compression (501) est en outre configuré pour compresser une largeur de bande de fréquence utilisée effectivement par le second système dans les cellules voisines de même fréquence pour rendre la largeur de bande de fréquence plus petite qu'une valeur de demande de largeur de bande prédéfinie.

13. Moyen de stockage lisible par ordinateur dans lequel une instruction de programme est stockée, dans lequel, lorsque l'instruction de programme est exécutée, le procédé selon l'une quelconque des revendications 1 à 8 peut être mis en œuvre.
